# EUROPEAN PATENT APPLICATION

(11) **EP 4 621 634 A1**
(43) Date of publication of application: **24.09.2025**
(21) Application number: 25154943.2
(22) Date of filing: 30.01.2025
(51) Int. Cl.: G06F 40/40, G06T 7/00

(54) **METHOD AND APPARATUS OF TEXT TRANSLATING, MEDIUM, ELECTRONIC DEVICE, AND COMPUTER PROGRAM PRODUCT**

(30) Priority: 21.03.2024 CN 202410330489
(71) Applicant: Beijing Youzhuju Network Technology Co., Ltd., Beijing 101299 (CN); Lemon Inc., Grand Cayman, KY1-1205 (KY)
(72) Inventor: HUANG, Luyang, Beijing, 100028 (CN); KANG, Liyan, Beijing, 100028 (CN); CHENG, Shanbo, 018960 Singapore (SG)
(74) Representative: Isarpatent

(57) **Abstract**

The present disclosure relates to a method and an apparatus of text translating method, a medium, an electronic device, and a computer program product, and relates to the field of computer technology. The method includes: obtaining a to-be-translated text, image information associated with the to-be-translated text, and an initial translation of the to-be-translated text (110); and inputting the to-be-translated text, the image information, and the initial translation into a trained text translation model to obtain a target translation and target description information (120). The text translation model is configured to obtain first image description information corresponding to the image information based on the image information, and correct the initial translation based on the first image description information and the to-be-translated text to obtain the target translation and the target description information. A translation with higher translation quality can be obtained, especially the performance in translation of ambiguous words is better, and ambiguous words can be correctly translated by describing image details. In addition, the output target description information can also provide interpretability for the correction of the translation.

## Description

### CROSS-REFERENCE TO RELATED APPLICATION

The present disclosure claims priority of the Chinese Patent Application No. 202410330489.2 filed on March 21, 2024, the disclosure of which is incorporated herein by reference in its entirety as part of the present application

### TECHNICAL FIELD

The present disclosure relates to the field of computer technology, and in particular, to a method and an apparatus of text translating, a medium, an electronic device, and a computer program product.

### BACKGROUND

Multi-modal translation (MMT) aims to perform machine translation by using a non-textual modality. In recent years, visual information has been more and more widely used in multi-modal translation. However, in the related art, the visual information is often spliced and fused with a text vector as global information, and then input into a model, without considering whether the visual information can really bring a positive effect to the text translation. In this case, the translation result of the multi-modal translation based on the visual information cannot be better than that of the machine translation relying on the textual information.

### SUMMARY

This Summary is provided to introduce concepts in a simplified form that are described in detail in the following Detailed Description section. This Summary section is not intended to identify key features or essential features of the claimed technical solution, nor is it intended to be used to limit the scope of the claimed technical solution.

In a first aspect, the present disclosure provides a method of text translating, including:

obtaining a to-be-translated text, image information associated with the to-be-translated text, and an initial translation corresponding to the to-be-translated text; and

inputting the to-be-translated text, the image information, and the initial translation into a trained text translation model to obtain a target translation and target description information corresponding to the to-be-translated text.

The text translation model is configured to obtain first image description information corresponding to the image information based on the image information, and correct the initial translation based on the first image description information and the to-be-translated text to obtain the target translation. The target description information is used to describe a reason for correcting the initial translation to the target translation.

In a second aspect, the present disclosure provides an apparatus of text translating, including:
a first obtaining module, configured to obtain a to-be-translated text, image information associated with the to-be-translated text, and an initial translation corresponding to the to-be-translated text; and
an obtaining module, configured to input the to-be-translated text, the image information, and the initial translation into a trained text translation model to obtain a target translation and target description information corresponding to the to-be-translated text.

The text translation model is configured to obtain first image description information corresponding to the image information based on the image information, and correct the initial translation based on the first image description information and the to-be-translated text to obtain the target translation. The target description information is used to describe a reason for correcting the initial translation to the target translation.

In a third aspect, the present disclosure provides a computer-readable medium having a computer program stored thereon. The computer program, when executed by a processing apparatus, implements the steps of the method according to the first aspect.

In a fourth aspect, the present disclosure provides an electronic device, including:
a storage apparatus having a computer program stored thereon; and
a processing apparatus configured to execute the computer program in the storage apparatus to implement the steps of the method according to the first aspect.

In a fifth aspect, the present disclosure provides a computer program product including a computer program. The computer program, when executed by a processor, implements the steps of the method according to the first aspect.

Based on the above technical solutions, by obtaining a to-be-translated text, image information associated with the to-be-translated text, and an initial translation corresponding to the to-be-translated text, and inputting the to-be-translated text, the image information, and the initial translation into a trained text translation model to obtain a target translation and target description information corresponding to the to-be-translated text, where the text translation model is configured to obtain first image description information corresponding to the image information based on the image information, and correct the initial translation based on the first image description information and the to-be-translated text to obtain the target translation and the target description information, the image information can be incorporated into the text translation when the image information is required, so as to obtain a translation with higher translation quality, especially the performance in translation of ambiguous words is better, and ambiguous words can be correctly translated by describing image details. In addition, the output target description information can also provide interpretability for the correction of the translation.

Other features and advantages of the present disclosure will be described in detail in the following Detailed Description section.

### BRIEF DESCRIPTION OF DRAWINGS

The above and other features, advantages and aspects of various embodiments of the present disclosure will become more apparent with reference to the following detailed description and in conjunction with the drawings. Throughout the drawings, the same or similar reference numbers refer to the same or similar elements. It should be understood that the drawings are schematic and that parts and elements are not necessarily drawn to scale. In the drawings:
Fig. 1 is a flowchart of a method of text translating according to some embodiments.
Fig. 2 is a schematic diagram of image information according to some embodiments.
Fig. 3 is a schematic diagram of a text translation model according to some embodiments.
Fig. 4 is a schematic principle diagram of a text translation model according to some embodiments.
Fig. 5 is a flowchart of training a text translation model according to some embodiments.
Fig. 6 is a flowchart of training a text translation model according to further embodiments.
Fig. 7 is a schematic diagram of the effect of a text translation model according to some embodiments.
Fig. 8 is a schematic structural diagram of an apparatus of text translating according to some embodiments.
Fig. 9 is a schematic structural diagram of an electronic device according to some embodiments.

### DETAILED DESCRIPTION

Embodiments of the present disclosure will be described in more detail below with reference to the drawings. Although some embodiments of the present disclosure are shown in the drawings, it should be understood that the present disclosure can be implemented in various forms and should not be construed as being limited to the embodiments set forth herein. On the contrary, these embodiments are provided for a more thorough and complete understanding of the present disclosure. It should be understood that the drawings and the embodiments of the present disclosure are only for exemplary purposes, and are not intended to limit the protection scope of the present disclosure.

It should be understood that the various steps described in the method implementations of the present disclosure can be executed in different orders, and/or executed in parallel. In addition, the method implementations may include additional steps and/or omit the execution of the steps shown. The protection scope of the present disclosure is not limited in this aspect.

The term "include" and its variations used herein are open-ended inclusions, that is, "include but not limited to". The term "based on" is "at least partially based on". The term "one embodiment" means "at least one embodiment". The term "another embodiment" means "at least one further embodiment". The term "some embodiments" means "at least some embodiments". Relevant definitions of other terms will be given in the following description.

It should be noted that the concepts of "first", "second", etc. mentioned in the present disclosure are only used to distinguish different apparatuses, modules or units, and are not used to limit the order or interdependence of the functions performed by these apparatuses, modules or units.

It should be noted that the modifiers of "one" and "a plurality of" mentioned in the present disclosure are illustrative rather than restrictive, and those skilled in the art should understand that unless otherwise clearly indicated in the context, they should be understood as "one or more".

The names of messages or information exchanged between apparatuses in the embodiments of the present disclosure are only used for illustrative purposes, and are not used to limit the scope of these messages or information.

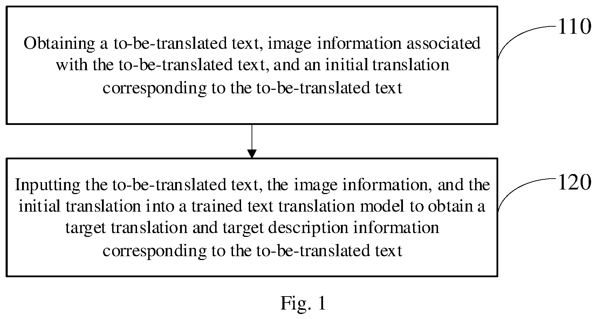

Fig. 1 is a flowchart of a method of text translating according to some embodiments. As shown in Fig. 1, the embodiments of the present disclosure provide a method of text translating, which can be executed by an electronic device, and in particular, can be executed by an apparatus of text translating, which can be implemented by software and/or hardware and configured in the electronic device. As shown in Fig. 1, the method may include the following steps.

In step 110, a to-be-translated text, image information associated with the to-be-translated text, and an initial translation corresponding to the to-be-translated text are obtained.

Here, the to-be-translated text refers to a text that needs to be translated. It should be understood that the to-be-translated text may be a text in any language, such as Chinese, English, French, Spanish, and so on. The image information associated with the to-be-translated text may refer to an image matched with the to-be-translated text. Taking picture translation as an example, the image information may be a picture, and the to-be-translated text may be text on the picture. Taking video translation as an example, the image information may be a video, and the to-be-translated text may be a subtitle of the video.

The initial translation corresponding to the to-be-translated text may be a translation of the to-be-translated text obtained by a text-only model. The text-only model focuses on processing and understanding text information, and can be obtained by training a machine learning model with text data.

Exemplarily, the to-be-translated text can be input into the trained text-only model, and the initial translation corresponding to the to-be-translated text can be obtained.

In step 120, the to-be-translated text, the image information, and the initial translation are input into a trained text translation model to obtain a target translation and target description information corresponding to the to-be-translated text.

Here, the text translation model is configured to obtain first image description information corresponding to the image information based on the image information, and correct the initial translation based on the first image description information and the to-be-translated text to obtain the target translation.

The target description information is used to describe a reason for correcting the initial translation to the target translation. The first image description information is used to perform a text description on content details in the image information. By means of the first image description information, the text translation model can have a profound understanding of the image information, and use comprehensive text to express the understood image content. The first image description information can be used as a discrete visual feature other than an image query embedding, so that the text translation model can correct the initial translation by means of the first image description information.

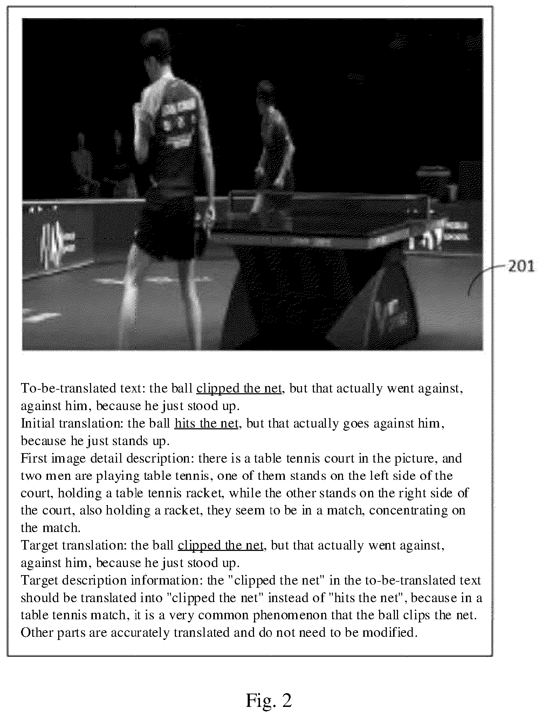

Fig. 2 is a schematic diagram of image information according to some embodiments. As shown in Fig. 2, a first image detail description of image information 201 may be "There is a table tennis court in the picture, and two men are playing table tennis. One of them stands on the left side of the court, holding a table tennis racket, while the other stands on the right side of the court, also holding a racket. They seem to be in a match, concentrating on the match". That is, the first image description information is actually information that the text translation model expresses the content details in the image in a written language.

The to-be-translated text corresponding to the image information 201 is "The ball clipped the net, but that actually went against, against him, because he just stood up.", and the initial translation corresponding to the to-be-translated text is "The ball hits the net, but that actually goes against him, because he just stands up".

The target translation output by the text translation model is "The ball clipped the net, but that actually went against, against him, because he just stood up". The target description information output by the text translation model is "The "clipped the net" in the to-be-translated text should be translated into "clipped the net" instead of "hits the net", because in a table tennis match, it is a very common phenomenon that the ball clips the net. Other parts are accurately translated and do not need to be modified".

That is, the text translation model first generates the first image description information corresponding to the image information based on the image information, and then corrects the initial translation according to the first image description information and the to-be-translated text to obtain the target translation, and provides the target description information for describing a correction basis.

It should be noted that the first image description information has no semantic gap with the text, and can provide additional information in addition to continuous vectors, so that the text translation model can have a deep understanding of the image information. The target description information is equivalent to a chain of thought, which is used to encourage the reasoning ability of the text translation model and provide interpretability. By means of the target description information, the text translation model can learn to use the image information to correct the initial translation when the image information needs to be used, and not to use the image information to correct the initial translation when the image information is not required.

In the embodiments of the present disclosure, the text translation model may use the image information to perform the text translation when the image information is required, while when the initial translation is sufficiently accurate, the image information is not used to correct the initial translation, but the initial translation is directly used as the target translation. That is, when the text-only model cannot correctly translate the to-be-translated text, the initial translation is corrected by means of the first image description information. It should be noted that a connection is established between the visual understanding of the image information and the corrected target translation, so that the ambiguous words in the corrected target translation can be correctly translated.

It should be understood that if the text translation model obtains the target translation without correcting the initial translation, the target description information may be blank information or information representing that the initial translation does not need to be modified, to indicate that the text translation model does not need to correct the initial translation based on the first image description information.

Therefore, by means of obtaining a to-be-translated text, image information associated with the to-be-translated text, and an initial translation corresponding to the to-be-translated text, and inputting the to-be-translated text, the image information, and the initial translation into a trained text translation model to obtain a target translation and target description information corresponding to the to-be-translated text, where the text translation model is configured to obtain first image description information corresponding to the image information based on the image information, and correct the initial translation based on the first image description information and the to-be-translated text to obtain the target translation and the target description information, the image information can be incorporated into the text translation when the image information is required, so as to obtain a translation with higher translation quality, especially the performance in translation of ambiguous words is better, and ambiguous words can be correctly translated by describing image details. In addition, the output target description information can also provide interpretability for the correction of the translation.

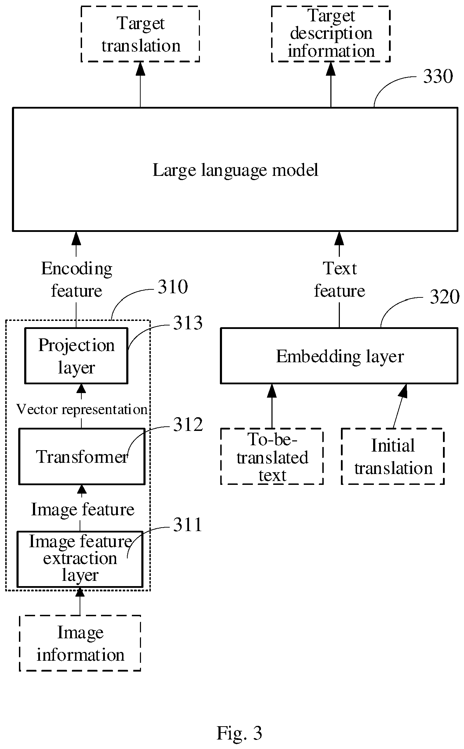

Fig. 3 is a schematic diagram of a text translation model according to some embodiments. As shown in Fig. 3, in some implementable implementations, the text translation model includes a feature extraction module 310, an embedding layer 320, and a large language model 330 (Large Language Model, LLM).

Here, the feature extraction module 310 and the embedding layer 320 are respectively connected to the large language model 330. The feature extraction module 310 is configured to extract an encoding feature in a text space from the image information; the embedding layer 320 is configured to obtain a corresponding text feature according to the to-be-translated text and the initial translation; and the large language model 330 is configured to obtain the first image description information according to the encoding feature, and obtain the target translation and the target description information according to the first image description information and the text feature.

In multi-modal translation, the large language model 330 is a deep learning model trained based on massive text data. It can not only generate a natural language text, but also deeply understand the meaning of the text, and process various natural language tasks, such as text summarization, question answering, translation, etc. Since the modality input to the text translation model is multi-modal information (including an image and a text), in order for the large language model 330 to understand the semantics of the image, the encoding feature in the text space can be extracted from the image information by means of the feature extraction module 310, and the image information can be converted into a representation that can be understood by the large language model 330, so that the large language model 330 can accurately understand the semantics of the image information.

The embedding layer 320 may be a layer or component used to transform text data into dense vector representations when deep learning is applied to natural language processing tasks, and in a neural network model, Embedding layer (embedding layer 320) can be used to perform this function.

The to-be-translated text and the initial translation can be input into the embedding layer 320 respectively, the embedding layer 320 transforms the to-be-translated text into a first text feature, and the embedding layer 320 transforms the initial translation into a second text feature. It should be understood that the text translation model may include a splicing layer, which is configured to splice the encoding feature, the first text feature and the second text feature into a fused feature, and then input the fused feature into the large language model 330, so that the large language model 330 obtains the target translation and the target description information according to the fused feature.

It should be noted that the to-be-translated text and the initial translation can be segmented, and the segmented to-be-translated text and the segmented initial translation can be input into the embedding layer 320.

As shown in Fig. 3, in some implementable implementations, the feature extraction module 310 may include an image feature extraction layer 311, a transformer 312, and a projection layer 313 that are connected in sequence, where the image feature extraction layer 311 is configured to extract an image feature from the image information; the transformer 312 is configured to obtain a vector representation carrying semantic information according to the image feature; and the projection layer 313 is configured to map the vector representation to the text space to obtain the encoding feature.

The feature extraction module 310 may be an image encoder (Image Encoder), and the image encoder extracts the image feature from the image information. The transformer 312 may be a Q-Former (Querying Transformer), and the Q-Former is a lightweight Transformer, which uses a set of learnable query vectors to extract the image feature from the frozen image feature extraction layer 311 to obtain the vector representation carrying the semantic information. Exemplarily, the vector representation may be 32 query embedding sequences, so as to improve the training and inference efficiency of the text translation model. The projection (projection) layer may be a linear projection layer 313, and the projection layer 313 converts the vector representation output by the transformer 312 to the text space of the large language model 330 to obtain the encoding feature, which is used as an input to the text-only large language model 330.

Through the image feature extraction layer 311, the transformer 312, and the projection layer 313, the image information can be mapped to the text space where the text feature is located, so that the large language model 330 can correctly understand the semantics of the image information and generate accurate first image description information. Based on the encoding feature that can be understood by the large language model 330, the large language model 330 can identify specific scenes, objects, and features in the image and give a detailed text description of them. In some embodiments, the self-attention layer of the large language model 330 includes a low-rank adapter (LORA, Low-Rank Adaptation of Large Language Models, low-rank adapter of the large language model 330, which is a parameter-efficient fine-tuning method).

The low-rank adapter is embedded in the self-attention layer of the large language model 330 to effectively capture the characteristics of the sequence structure. By using the Q-Former and the LORA, the gap between the image information and the text can be bridged on the large language model 330, so that the large language model 330 can support the input of the multi-modal feature.

Exemplarily, the rank r parameter of the low-rank adapter can be set to 8, and the parameter of alpha can be set to 16.

Therefore, by means of the text translation model shown in the above embodiments, the image information can be converted into the encoding feature that can be recognized by the large language model 330, so that the large language model 330 can correctly understand the semantics of the image information to generate more accurate first image description information, thereby enabling the large language model 330 to output the target translation with better translation quality.

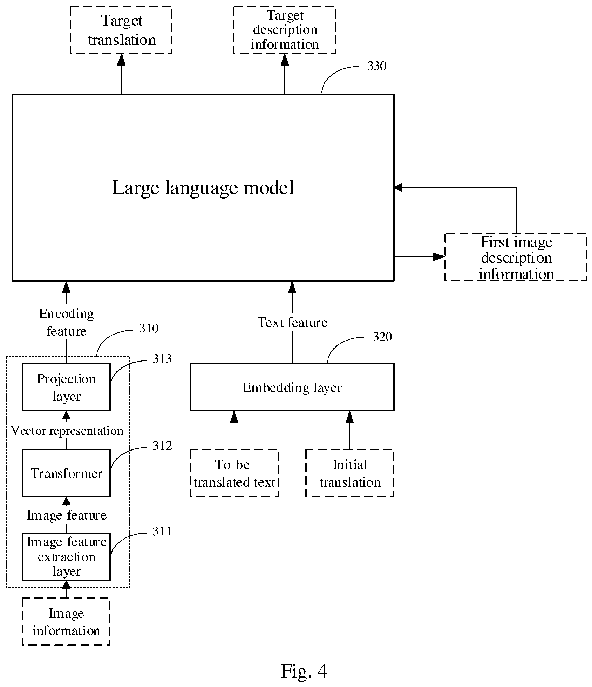

Fig. 4 is a schematic principle diagram of a text translation model according to some embodiments. As shown in Fig. 4, the large language model 330 obtains the first image description information corresponding to the image information according to the encoding feature, and then the large language model 330 obtains the target translation and the target description information based on the first image description information, the to-be-translated text, and the text feature corresponding to the initial translation. It should be understood that the text translation model actually generates the first image description information for describing image details of the image information by means of iterative decoding, and then corrects the initial translation generated by the text-only model through explanation, to obtain the corrected target translation and the target description information revealing the reason.

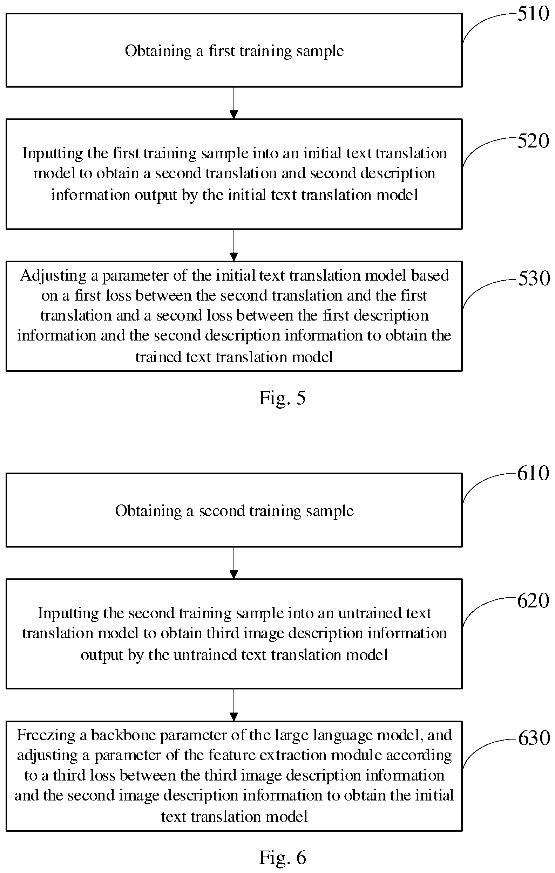

Fig. 5 is a flowchart of training a text translation model according to some embodiments. As shown in Fig. 5, in some implementable implementations, the trained text translation model can be obtained by the following steps.

In step 510, a first training sample is obtained.

Here, the first training sample is a sample text carrying a first label, a first sample image corresponding to the sample text, and a sample translation corresponding to the sample text. The first label is a first translation and first description information corresponding to the sample text, and the first description information is used to describe a reason for correcting the sample translation to the first translation.

The sample translation may be a translation corresponding to the sample text obtained by a text-only model. The concept of the sample translation is consistent with that of the to-be-translated text in the above embodiments, and will not be repeated here. The first description information is consistent with the concept of the target description information in the above embodiments, and will not be repeated here. The first translation may be a translation corresponding to the sample text translated manually. It should be understood that the first description information may be written by an expert to describe the reason for correcting the sample translation to the first translation.

In step 520, the first training sample is input into an initial text translation model, and a second translation and second description information output by the initial text translation model are obtained.

Here, the initial text translation model may refer to an untrained machine learning model, or may refer to a machine learning model that has been preliminarily trained. It should be understood that the model structure of the initial text translation model can be referred in Fig. 3 above.

The first training sample can be input into the initial text translation model, and the second translation and the second description information output by the initial text translation model can be obtained. The second translation and the second description information are prediction results obtained by the text translation model according to the first sample image, the sample text, and the sample translation.

In step 530, a parameter of the initial text translation model is adjusted based on a first loss between the second translation and the first translation and a second loss between the first description information and the second description information to obtain the trained text translation model.

Here, the first loss between the second translation and the first translation can be calculated, and the second loss between the first description information and the second description information can be calculated. Then, according to the first loss and the second loss, a corresponding total loss is obtained by combining a loss function. Then, the parameter of the initial text translation model is adjusted according to the total loss to obtain the trained text translation model.

It should be noted that the first loss and the second loss can be calculated by a cross-entropy loss function. Of course, other loss functions can also be used to calculate the first loss and the second loss, which are not specifically limited in the embodiments of the present disclosure.

Exemplarily, the loss function may be L=a*Lpro+Lres, where L is the total loss, Lpro is the first loss, Lres is the second loss, and a is a weight parameter, which can be set to 0.05 or other values.

It should be noted that the parameter of the text translation model can be adjusted based on the total loss through backpropagation, so that the adjusted text translation model can meet a preset training condition, and the trained text translation model can be obtained. In the embodiments of the present disclosure, the initial text translation model can be continuously trained with a given training sample set, so that the total loss calculated based on the loss function can reach an optimal solution, that is, the training of the initial text translation model is completed. The training sample set includes a plurality of first training samples.

It should be understood that during the training process of the initial text translation model, the parameters of the large language model and the embedding layer can be adjusted, and the feature extraction module can be pre-trained.

Therefore, through the above steps 510 to 530, the trained text translation model can correct the initial translation based on the image information and provide corresponding target description information to explain the reason for the correction.

Fig. 6 is a flowchart of training a text translation model according to further embodiments. As shown in Fig. 6, in some implementable implementations, the initial text translation module can be obtained by the following steps.

In step 610, a second training sample is obtained.

Here, the second training sample may be a second sample image carrying second image description information. The second sample image may be an image from an LLAVA dataset. The LLAVA dataset has 23k images with comprehensive descriptions. The concept of the second image description information is consistent with that of the first image description information above, and will not be repeated here.

In some embodiments, the second sample image can be obtained, and the second sample image and an entry corresponding to the second sample image can be input into a natural language generation model to obtain the second image description information corresponding to the second sample image, and then the second image description information is associated with the second sample image to obtain the second training sample.

The entry is used to indicate the natural language generation model to describe an image detail of the second sample image.

The natural language generation model is a model capable of generating a text or word sequence similar to a human-written language. Exemplarily, the natural language generation model may be GPT-4 (OpenAI is a language model published by the chatbot ChatGPT), and of course, the natural language generation model may also be other models.

An entry for guiding the natural language generation model to describe the image detail of the second sample image can be constructed based on the second sample image, and then the entry and the second sample image are input into the natural language generation model, so that the natural language generation model outputs the second image description information corresponding to the second sample image.

Then, the second image description information can be associated with the second sample image to obtain the second training sample. It should be understood that the association between the second image description information and the second sample image refers to using the second image description information as a label corresponding to the second sample image for supervised training of the text translation model.

In step 620, the second training sample is input into an untrained text translation model, and third image description information output by the untrained text translation model is obtained.

Here, the model structure of the untrained text translation model can be as shown in Fig. 3 above. The second training sample can be input into the untrained text translation model, and the output third image description information can be obtained. The third image description information is information for describing image detail content of the second sample image generated by the text translation model based on the second sample image.

In step 630, a backbone parameter of the large language model is frozen, and a parameter of the feature extraction module is adjusted according to a third loss between the third image description information and the second image description information to obtain the initial text translation model.

Here, the third loss between the third image description information and the second image description information can be calculated. Exemplarily, the third loss can be calculated by a cross-entropy loss function. Of course, other loss functions can also be used to calculate the third loss, which is not specifically limited in the embodiments of the present disclosure.

Then, the backbone parameter of the large language model is frozen, and the parameter of the feature extraction module is adjusted according to the third loss through backpropagation, so that the adjusted text translation model can meet a preset training condition, and the initial text translation model is obtained.

It should be noted that the adjustment of the parameter of the feature extraction module may be the adjustment of the parameter of the projection layer and the parameter of the low-rank adapter.

Therefore, through the above steps, the text translation model can accurately extract the encoding feature and have a profound understanding of the image, so as to use comprehensive text to express the detail content of the image.

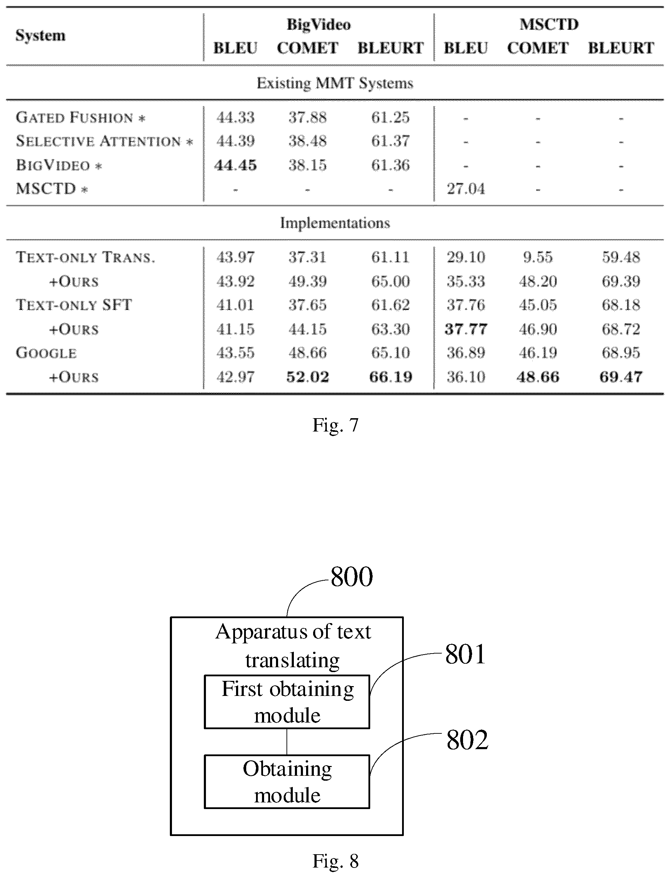

Fig. 7 is a schematic diagram of the effect of a text translation model according to some embodiments. As shown in Fig. 7, for two En-Zh (English-Chinese) datasets, Bigvideo (large-scale video translation task) and MSCTD (a multi-modal emotional chat translation dataset), the text translation model proposed in the embodiments of the present disclosure has a significant improvement in both the COMET and BLEURT indicators compared with existing MMT models (including a text-only model (TEXT-ONLY TRANS), a text-only fine-tuned large language model (TEXT-ONLY SFT), and a third-party translation (GOOGLE)).

BLEU (Bilingual Evaluation Understudy) is a machine translation evaluation indicator, which evaluates translation quality by calculating the accuracy of candidate sentences generated by a translation system with reference sentences. COMET (Consensus-based Machine Translation Evaluation) is a neural network-based translation quality evaluation model, which uses a pre-trained language model to predict the similarity between a given translation and a reference text, and can better capture the context and overall quality of the translation. BLEURT (Bilingual Evaluation Understudy with Reformulation-based Training) is an evaluation indicator, which aims to solve the deficiencies of BLEU in evaluating translation fluency, appropriateness and overall quality, and provides a score closer to human judgment standards.

Fig. 8 is a schematic structural diagram of an apparatus of text translating according to some embodiments. As shown in Fig. 8, the embodiments of the present disclosure provide an apparatus 800 of text translating, which includes:
a first obtaining module 801, configured to obtain a to-be-translated text, image information associated with the to-be-translated text, and an initial translation corresponding to the to-be-translated text; and
an obtaining module 802, configured to input the to-be-translated text, the image information, and the initial translation into a trained text translation model to obtain a target translation and target description information corresponding to the to-be-translated text.

The text translation model is configured to obtain first image description information corresponding to the image information based on the image information, and correct the initial translation based on the first image description information and the to-be-translated text to obtain the target translation. The target description information is used to describe a reason for correcting the initial translation to the target translation.

Optionally, the text translation model includes:
a feature extraction module, configured to extract an encoding feature in a text space from the image information;
an embedding layer, configured to obtain a corresponding text feature according to the to-be-translated text and the initial translation; and
a large language model, configured to obtain the first image description information according to the encoding feature, and obtain the target translation and the target description information according to the first image description information and the text feature.

Optionally, the feature extraction module includes:
an image feature extraction layer, configured to extract an image feature from the image information;
a transformer, configured to obtain a vector representation carrying semantic information according to the image feature; and
a projection layer, configured to map the vector representation to the text space to obtain the encoding feature.

Optionally, the self-attention layer of the large language model includes a low-rank adapter.

Optionally, the apparatus 800 of text translating 800 further includes:
a second obtaining module, configured to obtain a first training sample, where the first training sample is a sample text carrying a first label, a first sample image corresponding to the sample text, and a sample translation corresponding to the sample text, the first label is a first translation and first description information corresponding to the sample text, and the first description information is used to describe a reason for correcting the sample translation to the first translation;
a first input module, configured to input the first training sample into an initial text translation model, and obtain a second translation and second description information output by the initial text translation model; and
a first adjustment module, configured to adjust a parameter of the initial text translation model based on a first loss between the second translation and the first translation and a second loss between the first description information and the second description information to obtain the trained text translation model.

Optionally, the text translation model includes a feature extraction module configured to extract the encoding feature from the image information, and a large language model configured to obtain the first image description information according to the encoding feature; optionally, the apparatus 800 of text translating further includes:
a third obtaining module, configured to obtain a second training sample, where the second training sample is a second sample image carrying second image description information;
a second input module, configured to input the second training sample into an untrained text translation model to obtain third image description information output by the untrained text translation model; and
a second adjustment module, configured to freeze a backbone parameter of the large language model, and adjust a parameter of the feature extraction module according to a third loss between the third image description information and the second image description information to obtain the initial text translation model.

Optionally, the third obtaining module includes:
a sample obtaining unit, configured to obtain a second sample image;
an obtaining unit, configured to input the second sample image and an entry corresponding to the second sample image into a natural language generation model to obtain second image description information corresponding to the second sample image, where the entry is used to indicate the natural language generation model to describe an image detail of the second sample image; and
an association unit, configured to associate the second image description information with the second sample image to obtain the second training sample.

For the logic of the method performed by each functional module in the apparatus 800 of text translating, reference may be made to the method-related part of the above embodiments, which will not be repeated here.

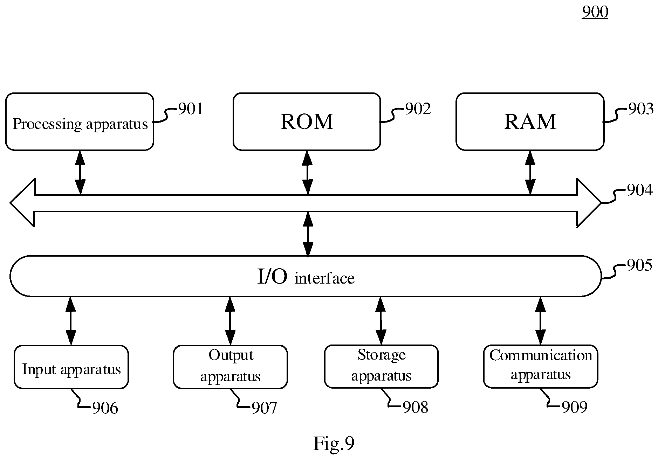

Reference is made to Fig. 9 below, which illustrates a schematic structural diagram of an electronic device 900 (such as a terminal device or a server) suitable for implementing an embodiment of the present disclosure. The terminal device in the embodiment of the present disclosure may include, but is not limited to, mobile terminals such as a mobile phone, a laptop, a digital broadcast receiver, a personal digital assistant (PDA), a tablet computer, a portable multimedia player (PMP), a vehicle-mounted terminal (e.g., a vehicle-mounted navigation terminal), and the like, and fixed terminals such as a digital TV, a desktop computer, and the like. The electronic device shown in Fig. 9 is only an example, and should not bring any limitation to the function and scope of use of the embodiments of the present disclosure.

As shown in Fig. 9, the electronic device 900 may include a processing apparatus (such as a central processing unit, a graphics processing unit, etc.) 901, which can perform various appropriate actions and processes according to a program stored in a read-only memory (ROM) 902 or a program loaded from a storage apparatus 908 into a random access memory (RAM) 903. In the RAM 903, various programs and data required for the operation of the electronic device 900 are also stored. The processing apparatus 901, the ROM 902, and the RAM 903 are connected to each other through a bus 904. An input/output (I/O) interface 905 is also connected to the bus 904.

Generally, the following apparatus can be connected to the I/O interface 905: an input apparatus 906 including, for example, a touchscreen, a touchpad, a keyboard, a mouse, a camera, a microphone, an accelerometer, a gyroscope, etc.; an output apparatus 907 including, for example, a liquid crystal display (LCD), a speaker, a vibrator, etc.; a storage apparatus 908 including, for example, a magnetic tape, a hard disk, etc.; and a communication apparatus 909. The communication apparatus 909 may allow the electronic device 900 to perform wireless or wired communication with other devices to exchange data. Although Fig. 9 shows the electronic device 900 having various apparatuses, it should be understood that it is not required to implement or have all of the illustrated apparatuses. More or fewer apparatuses may alternatively be implemented or provided.

In particular, according to an embodiment of the present disclosure, the processes described above with reference to the flowcharts can be implemented as a computer software program. For example, an embodiment of the present disclosure includes a computer program product, which includes a computer program carried on a non-transitory computer-readable medium, and the computer program contains program code for performing the method shown in the flowchart. In such an embodiment, the computer program can be downloaded and installed from a network through the communication apparatus 909, or installed from the storage apparatus 908, or installed from the ROM 902. When the computer program is executed by the processing apparatus 901, the above-mentioned functions defined in the method of the embodiment of the present disclosure are executed.

It should be noted that the above computer-readable medium in the present disclosure may be a computer-readable signal medium or a computer-readable storage medium or any combination thereof. The computer-readable storage medium may be, for example, but not limited to, an electronic, magnetic, optical, electromagnetic, infrared, or semiconductor system, apparatus, or device, or any combination thereof. More specific examples of the computer-readable storage medium may include, but are not limited to: an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program that can be used by or in combination with an instruction execution system, apparatus, or device. In the present disclosure, the computer-readable signal medium may include a data signal that propagates in a baseband or as part of a carrier and carries computer-readable program code. The propagated data signal may take a variety of forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program for use by or in combination with an instruction execution system, apparatus, or device. The program code included on the computer-readable medium may be transmitted by any suitable medium, including but not limited to: a wire, an optical cable, RF (radio frequency), etc., or any suitable combination thereof.

In some implementations, the electronic device can communicate using any currently known or future-developed network protocol, such as HTTP (HyperText Transfer Protocol), and can be interconnected with digital data communication (for example, a communication network) in any form or medium. Examples of the communication network include a local area network ("LAN"), a wide area network ("WAN"), an internetwork (for example, the Internet), and a peer-to-peer network (for example, an ad hoc peer-to-peer network), as well as any currently known or future-developed network.

The above computer-readable medium may be included in the above electronic device, or may exist alone without being assembled into the electronic device.

The computer-readable medium carries one or more programs, and when the one or more programs are executed by the electronic device, the electronic device is caused to: obtain a to-be-translated text, image information associated with the to-be-translated text, and an initial translation corresponding to the to-be-translated text; and input the to-be-translated text, the image information, and the initial translation into a trained text translation model to obtain a target translation and target description information corresponding to the to-be-translated text. The text translation model is configured to obtain first image description information corresponding to the image information based on the image information, and correct the initial translation based on the first image description information and the to-be-translated text to obtain the target translation. The target description information is used to describe a reason for correcting the initial translation to the target translation.

Computer program codes for performing the operations of the present disclosure may be written in one or more programming languages or a combination thereof. The above programming languages include object-oriented programming languages such as Java, Smalltalk, C++, and also include conventional procedural programming languages such as the "C" language or similar programming languages. The program codes can be executed entirely on a user's computer, partly on a user's computer, as a stand-alone software package, partly on a user's computer and partly on a remote computer, or entirely on a remote computer or a server. In the case of a remote computer, the remote computer can be connected to the user's computer through any kind of network including a local area network (LAN) or a wide area network (WAN), or can be connected to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowchart or block diagram may represent a module, a program segment, or a part of code, and the module, the program segment, or the part of code contains one or more executable instructions for implementing a specified logical function. It should also be noted that in some alternative implementations, the functions indicated in the blocks may also occur in a different order than the order indicated in the drawings. For example, two blocks shown in succession may actually be executed substantially in parallel, or they may sometimes be executed in the reverse order, depending on the functions involved. It should also be noted that each block in the block diagram and/or flowchart, and a combination of blocks in the block diagram and/or flowchart, can be implemented by a dedicated hardware-based system that performs the specified functions or operations, or can be implemented by a combination of dedicated hardware and computer instructions.

The modules involved in the embodiments of the present disclosure may be implemented by software or hardware. The name of the module does not constitute a limitation on the module itself under certain circumstances.

The functions described herein above may be performed at least in part by one or more hardware logic components. For example, without limitation, exemplary types of hardware logic components that may be used include: a field programmable gate array (FPGA), an application specific integrated circuit (ASIC), an application specific standard product (ASSP), a system on a chip (SOC), a complex programmable logic device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The above description is only a preferred embodiment of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosed concept, for example, a technical solution formed by replacing the above features with the technical features disclosed in the present disclosure (but not limited to) having similar functions.

In addition, although the operations are depicted in a specific order, this should not be understood as requiring the operations to be performed in the specific order shown or in a sequential order. Under certain circumstances, multitasking and parallel processing may be beneficial. Similarly, although several specific implementation details are included in the above discussion, these should not be interpreted as limiting the scope of the present disclosure. Certain features described in the context of separate embodiments can also be implemented in combination in a single embodiment. Conversely, various features described in the context of a single embodiment can also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. On the contrary, the specific features and actions described above are only example forms for implementing the claims. Regarding the apparatus in the above embodiments, the specific way in which each module performs operations has been described in detail in the embodiments related to the method, and will not be elaborated here.

## Claims

1. A method of text translating, comprising:
obtaining a to-be-translated text, image information associated with the to-be-translated text, and an initial translation corresponding to the to-be-translated text (110); and
inputting the to-be-translated text, the image information, and the initial translation into a trained text translation model to obtain a target translation and target description information corresponding to the to-be-translated text (120),
wherein, the text translation model is configured to obtain first image description information corresponding to the image information based on the image information, and correct the initial translation based on the first image description information and the to-be-translated text to obtain the target translation, and the target description information is used to describe a reason for correcting the initial translation to the target translation.

2. The method according to claim 1, wherein the text translation model comprises:
a feature extraction module (310), configured to extract an encoding feature in a text space from the image information;
an embedding layer (320), configured to obtain a corresponding text feature according to the to-be-translated text and the initial translation; and
a large language model (330), configured to obtain the first image description information according to the encoding feature, and obtain the target translation and the target description information according to the first image description information and the text feature.

3. The method according to claim 2, wherein the feature extraction module (310) comprises:
an image feature extraction layer (311), configured to extract an image feature from the image information;
a transformer (312), configured to obtain a vector representation carrying semantic information according to the image feature; and
a projection layer (313), configured to map the vector representation to the text space to obtain the encoding feature.

4. The method according to claim 2, wherein a self-attention layer of the large language model (330) comprises a low-rank adapter.

5. The method according to any one of claims 1 to 4, wherein the trained text translation model is obtained by the following steps:
obtaining a first training sample (510), wherein the first training sample is a sample text carrying a first label, a first sample image corresponding to the sample text, and a sample translation corresponding to the sample text, the first label is a first translation and first description information corresponding to the sample text, and the first description information is used to describe a reason for correcting the sample translation to the first translation;
inputting the first training sample into an initial text translation model to obtain a second translation and second description information output by the initial text translation model (520); and
adjusting a parameter of the initial text translation model based on a first loss between the second translation and the first translation and a second loss between the first description information and the second description information to obtain the trained text translation model (530).

6. The method according to claim 5, wherein the text translation model comprises a feature extraction module (310) configured to extract the encoding feature from the image information, and a large language model (330) configured to obtain the first image description information according to the encoding feature; and
the initial text translation model is obtained by the following steps:
obtaining a second training sample (610), wherein the second training sample is a second sample image carrying second image description information;
inputting the second training sample into an untrained text translation model to obtain third image description information output by the untrained text translation model (620); and
freezing a backbone parameter of the large language model (330), and adjusting a parameter of the feature extraction module (310) according to a third loss between the third image description information and the second image description information to obtain the initial text translation model (630).

7. The method according to claim 6, wherein the obtaining the second training sample comprises:
obtaining the second sample image;
inputting the second sample image and an entry corresponding to the second sample image into a natural language generation model to obtain the second image description information corresponding to the second sample image, wherein the entry is used to indicate the natural language generation model to describe an image detail of the second sample image; and
associating the second image description information with the second sample image to obtain the second training sample.

8. An apparatus (800) of text translating, comprising:
a first obtaining module (801), configured to obtain a to-be-translated text, image information associated with the to-be-translated text, and an initial translation corresponding to the to-be-translated text; and
an obtaining module (802), configured to input the to-be-translated text, the image information, and the initial translation into a trained text translation model to obtain a target translation and target description information corresponding to the to-be-translated text,
wherein the text translation model is configured to obtain first image description information corresponding to the image information based on the image information, and correct the initial translation based on the first image description information and the to-be-translated text to obtain the target translation, and the target description information is used to describe a reason for correcting the initial translation to the target translation.

9. A computer-readable medium having a computer program stored thereon, wherein the computer program, when executed by a processing apparatus, implements the steps of the method according to any one of claims 1 to 7.

10. An electronic device, comprising:
a storage apparatus having a computer program stored thereon; and
a processing apparatus configured to execute the computer program in the storage apparatus to implement the steps of the method according to any one of claims 1 to 7.

11. A computer program product comprising a computer program, wherein the computer program, when executed by a processor, implements the steps of the method according to any one of claims 1 to 7.
